# EUROPÄISCHE PATENTSCHRIFT

(11) **EP 2 919 961 B1**
(45) Veröffentlichungstag und Bekanntmachung des Hinweises auf die Patenterteilung: **08.01.2020**
(21) Anmeldenummer: 13811118.2
(22) Anmeldetag: 09.11.2013
(51) Int. Cl.: B29C 48/32, B29C 48/92, B29C 49/04, B29C 49/78, B29C 48/25, B29C 48/09

(54) **SCHLAUCHKOPF MIT TRIFUNKTIONELLEM BAUTEIL UND VERFAHREN ZUM OPTIMIEREN DER WANDDICKE EINES SCHMELZESCHLAUCHS**
PARISON HEAD WITH TRIFUNCTIONAL COMPONENT AND METHOD FOR OPTIMIZING THE WALL THICKNESS OF A MOLTEN TUBE
TÊTE DE TUYAU DOTÉE D'UN COMPOSANT TRIFONCTIONNEL ET PROCÉDÉ POUR OPTIMISER L'ÉPAISSEUR DE PAROI D'UN TUYAU DE FUSION

(30) Priorität: 15.11.2012 DE 102012022409
(43) Veröffentlichungstag der Anmeldung: 23.09.2015
(73) Patentinhaber: Gross, Heinz, 64380 Roßdorf (DE)
(72) Erfinder: Gross, Heinz, 64380 Roßdorf (DE)
(74) Vertreter: Habermann Intellectual Property Partnerschaft von Patentanwälten mbB
(86) Internationale Anmeldenummer: PCT/EP2013/003383
(87) Internationale Veröffentlichungsnummer: WO 2014/075786

(56) Entgegenhaltungen:
- DE-A1- 2 941 260
- DE-B3-102009 058 361
- FR-A- 1 500 288
- JP-A- S63 179 724
- US-B1- 6 773 249

## Beschreibung

Die Erfindung betrifft einen Schlauchkopf zum Austragen eines Schmelzeschlauchs zur Herstellung von Kapillaren, Schläuchen oder Rohren mit den Merkmalen des Oberbegriffs des Patentanspruchs 1. Die Erfindung betrifft auch ein Verfahren zum Optimieren einer Wanddicke eines Schmelzeschlauchs und zum Austragen des Schmelzeschlauchs aus einem derartigen Schlauchkopf.

### Stand der Technik

Es gibt drei Hauptanforderungen die Extrusionsköpfe, mit denen Schläuche aus Kunststoffschmelzen ausgetragen werden, erfüllen sollten. Erst einmal sollte der Fließkanal im Schlauchkopf absolut dicht sein. Zweitens sollten die Fließkanäle in Extrusionsköpfen auch keine abrupten Sprünge in der Fließkanalgeometrie besitzen, die zu Totstellen führen, da Kunststoffschmelzen thermisch abbauen, wenn sie längere Zeit auf erhöhten Temperaturen verweilen. An Fließkanalsprüngen verharrt die Kunststoffschmelze über längere Zeit und wird dabei dann thermisch geschädigt. Drittens sollte es natürlich aus ökonomischen Gründen Ziel sein, die gewünschte Funktionalität des Schlauchkopfes bei einem Maximum an Betriebssicherheit auf einfache und kostengünstige Art zu erreichen. Deshalb sind Lösungen besonders vorteilhaft, bei denen möglichst wenig Bauteile erforderlich sind, um die technische Aufgabenstellung zu erfüllen. Es ist immer von Vorteil, wenn man in eine Konstruktion Bauteile integrieren kann, die gleichzeitig mehrere technische Funktionen erfüllen können. Damit kann die Anzahl der zur Erfüllung einer spezifischen technischen Aufgabenstellung erforderlichen Einzelkomponenten verringert und die Komplexität und in aller Regel auch die Störanfälligkeit der Konstruktion verringert werden.

Nun ist es speziell beim Austragen von Schmelzeschläuchen häufig von erheblichem Vorteil, wenn man die Wanddicke des Schlauchs über dem Umfang und oder über der Länge des Schlauchs bei laufendem Prozess verändern oder optimieren kann. Dafür ist es notwendig, dass der Querschnitt des Fließkanalspalts am Ende der Düse während des Austrags des Schlauchs veränderbar ist. Je größer nun die in einem Schlauchkopf realisierten Verstellmöglichkeiten für die Querschnittsfläche des Fließkanalspalts am Düsenaustritt sind, um so größer werden folglich auch die verfahrenstechnischen Möglichkeiten, die mit dem Schlauchkopf darstellbar sind. Ziel der Erfindung war es nun, einen Schlauchkopf zu realisieren, der möglichst viele Verstellmöglichkeiten für die Querschnittsfläche des Fließkanalspalts des Schlauchkopfes besitzt, der aber trotzdem die drei eingangs formulierten Hauptanforderungen in idealer Weise ohne Einschränkungen erfüllt. Ziel war es insbesondere auch eine einfache und vor allem kostengünstige Lösung zu finden, mit der man auch die Länge des Kopfes verändern kann, ohne dass dabei im Fließkanal Unstetigkeiten oder Sprünge, das heißt, ohne dass dabei Totstellen im Fließkanal entstehen.

Bei Extrusionsköpfen zum Austragen von Schläuchen und Rohren ist es nach W. Michaeli, Extrusionswerkzeuge für Kunststoffe und Kautschuk, 2. Auflage, Carl Hanser Verlag München, ISBN 3-446-15637-2, Seite 155 Stand der Technik, dass die Düse bzw. das Mundstück mittels Zentrierschrauben, die über dem Umfang der Düse angeordnet sind, radial verschiebbar ist, um einen über dem Umfang gleichmäßigen Schmelzeaustritt zu erzielen. Dabei wird aber das Mundstück aus der idealen zentrischen Position, in der der Fließkanal in der Trennebene zwischen dem Kopf und dem Mundstück absolut bündig fortgeführt wird, herausgeschoben. Es entstehen somit zwangsläufig im Fließkanal die unerwünschten Totstellen im Bereich der Trennebene zwischen dem Kopf und dem Mundstück, da die Kante des Mundstücks in einem sich über den halben Umfang erstreckenden Bereich immer weiter in den vom Kopfende vorgegebenen Fließkanal hineinragt und in dem gegenüberliegenden zweiten Bereich immer weiter zurückspringt.

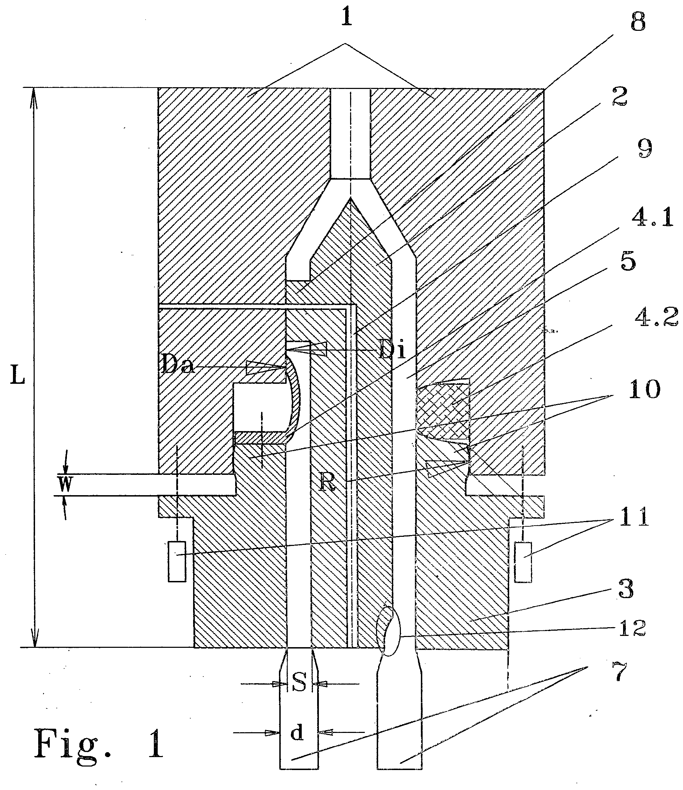

Zur Vermeidung derartiger Störkanten, die Totstellen für den Schmelzestrom bilden, wird in DE 42 14 241 C1 vorgeschlagen zwischen zwei Hülsenteilen (Kopf und Düse) eine Kupplung anzuordnen, so dass die Düse radial verschiebbar ist. Die in Figur 1 dargestellte und in der Beschreibung weiter nicht erläuterte Kupplung ist so, wie sie dargestellt ist, noch nicht einmal geeignet die Düse relativ zu dem Kopf zu verschieben. Interpretiert man die in der Kupplung 14 eingezeichnete Mittellinie als Schraubenmittellinie, mit der das beidseitig schraffierte elastische Mittelteil der Kupplung 14 über den gesamten Umfang verspannt ist, dann kann die Düse nicht verschoben werden, ohne dass sich alle Spannschrauben verbiegen. Selbst wenn man das zulassen würde, wäre diese Kupplung nicht totstellenfrei, da auf Grund des hohen Schmelzedrucks das in der Mitte der Kupplung befindliche elastische Teil in den Bereichen zwischen den einzelnen Spannschrauben, in denen es folglich nicht nach außen hin abgestützt ist, lokal radial nach außen gedrückt wird. Folglich entstehen auch bei dieser Lösung unerwünschte Totstellen im Fließkanal.

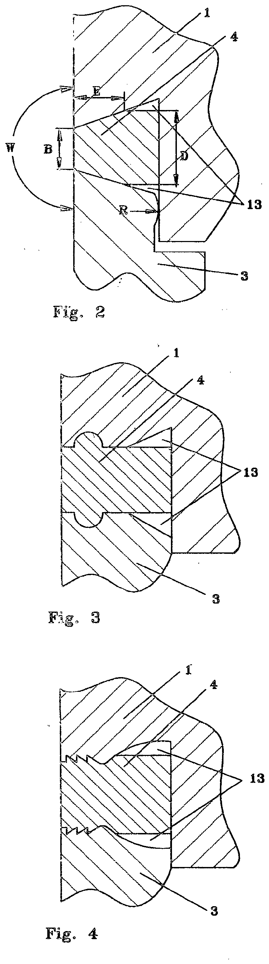

Die in Fig. 2 dargestellte und in der Beschreibung auch weiter erläuterte Kupplung erlaubt zwar ein radiales Verschieben der Düse relativ zum Kopf. Die dargestellte Kupplung mit dem elastischen Überbrückungsglied 22 ist aber bei den hohen Drücken, die in einem Schmelzekanal üblicherweise herrschen, nicht geeignet, um den Fließkanal abzudichten. Wenn das Überbrückungsglied 22 wie beschrieben über einen Klemmflansch 23 (Fig. 2 und Beschreibung 2/34) formschlüssig gehalten ist, dann ist das nur möglich, wenn die beiden umlaufenden Ränder des elastischen Überbrückungsglieds 22 mittels der Klemmflansche 23 gespannt (gestaucht!) werden.

Auf Grund der Inkompressibilität (die Materialdichte wird durch äußere Kräfte nicht verändert) muss das Material durch das Stauchen des Überbrückungsglieds 22 aus den beiden umlaufenden Nuten der Klemmflansche 23 in die einzig mögliche (freie) radiale Richtung verdrängt werden. Dies führt dann aber wiederum dazu, dass sich die beiden freien Kanten des Überbrückungsglieds 22 in den beiden Randbereichen nahe der Hülsenteile 10 und 11 in den Fließkanal 13 hineinschieben und sich dabei zwangsläufig von den beiden Kanten der Hülsenteile 10 und 11 abheben, so dass wiederum Totstellen im Fließkanal entstehen. Dies ist erst einmal unabhängig davon, ob sich in dem Fließkanal Schmelze befindet, die unter Druck steht oder nicht. Kommt nun noch der Druck, der im Fließkanal herrscht, hinzu, dann wird das Überbrückungsglied 22 zusätzlich auch noch radial nach außen gedrückt, bis seine Rückseite die Innenoberflächen der Klemmflansche 23 berührt. Dabei heben sich dann die beiden Seitenflächen des Überbrückungsglieds 22 von den Seitenkanten der beiden Hülsenteile 10 und 11 noch weiter ab und es dringt Schmelze in den dadurch entstehenden Freiraum ein. Zusätzlich hat sich in der Praxis herausgestellt, dass Elastomere, selbst wenn sie eine große Shore Härte besitzen, auf Grund des hohen Drucks, unter dem die Schmelze im Fließkanal steht, durch vorhandene offene Spalte hindurchgedrückt werden, was dazu führt, dass das Überbrückungsglied 22 mit der Zeit durch den rückseitigen Spalt zwischen den beiden Klemmflanschen 23 "herausextrudiert" wird, so dass die in Fig. 2 beschriebene Lösung dann völlig versagt. Ein Verändern der Kopflänge ist mit dieser Lösung ebenfalls nicht möglich. Zusätzlich werden auch noch separate Klemmflansche 23 benötigt, um die Kupplung in das Kopfgehäuse einzuspannen.

In DE 10 2009 058 361 B3 ist nun eine Lösung beschrieben, bei der das Endteil 3 (Düse) mittels einer elastischen verformbaren Dichtung relativ zum Gehäusegrundkörper in beliebiger Richtung kippbar gelagert ist. Diese Lösung, bei der die elastische Dichtung auf ihrer Rückseite vom Gehäuseteil abgestützt wird und damit daran gehindert wird, dass sie nach außen ausweichen kann, dichtet zumindest in der nicht gekippten Position den Fließkanal 4 gegenüber der unter Druck stehenden Schmelze sicher ab. Beim Kippen das Endteils 3 wird allerdings das elastische Multifunktionsteil bereichsweise mehr oder weniger gestaucht. Entgegen der ursprünglichen Annahme, dass die Kanten der Dichtung auf Grund der Reibung in den Seitenflächen bündig mit dem Fließkanal 4 verbleiben und sich die Dichtung nur in der Mitte bauchförmig in den Fließkanal hineinschiebt, hat sich aber in der Praxis gezeigt, dass sich die Dichtung über ihre gesamte Höhe in den Fließkanal hineinschiebt, womit wieder die unerwünschten Totstellen im Fließkanal entstehen. Dies passiert bereits bei einem geringen Kippen der Düse. Noch kritischer wird es bei dieser Lösung natürlich, wenn man versuchen würde, die Länge des Gehäuses auch nur in geringem Maß zu verändern, da dabei das Multifunktionsteil in noch stärkerem Maß über den gesamten Umfang in den Fließkanal hineingeschoben würde.

Köpfe zum Austragen von Schläuchen für das Extrusionsblasformen besitzen in aller Regel die Möglichkeit für eine Relativverstellung und eine Gesamtverstellung des Austrittsspalts des Fließkanals. Unter Relativverstellung sei verstanden, dass der Fließkanalspalt ausgehend von der Neutralposition auf einer Seite verringert und auf der gegenüberliegenden Seite um das gleiche Maß vergrößert wird, was durch Verschieben oder auch durch Kippen der Düse erreicht wird. Um jedoch eine Gesamtverstellung (Verstellung des Fließkanalspalts über den gesamten Umfang um das gleiche Maß) realisieren zu können, muss man beim Stand der Technik eine gewisse Leckage des Kopfes in Kauf nehmen. Bei der Realtivverstellung zum Optimieren des Schlauchlaufs oder zur Herstellung von gekrümmten Schläuchen werden die Düsen meist, wie bei Rohrköpfen auch, relativ zum Dorn verschoben. Zum Zentrieren und für die Herstellung eines gekrümmten Schlauchs wird beim Extrusionsblasformen das Düsenendstück während des Austrags des Vorformlings in der Zentrierebene mittels großer Kräfte, die meist über Hydraulikkolben aufgebracht werden, verschoben (DE 29 707 060 U1 und DE 195 37 132 C2), wobei wiederum Totstellen im Fließkanal entstehen. Zusätzlich ergibt sich in der Trennebene der beiden Gehäuseteile durch die zyklische Verschiebung ein nicht zu vermeidender Verschleiß.

In DE 10 2004 028 100 A1, DE 10 2004 057 974 A sowie in DE 10 2005 026 726 A1 werden deshalb zur Relativverstellung die beiden Gehäuseteile mit Hilfe eines Kugelgelenks und einer kugelkalottenförmigen Lagerschale miteinander verbunden. Damit vermeidet man zwar die Bildung von Totstellen im Fließkanal muss aber in Kauf nehmen, dass über das Kugelgelenk ein gewisser Leckstrom auftritt. Das Kugelgelenk benötigt einen minimalen Spalt, damit sich die Kugel in der Lagerpfanne bewegen kann. Durch diesen Spalt dringt Schmelze aus dem Fließkanal nach außen. Somit ist diese Lösung ungeeignet, um eine absolute Dichtheit des Fließkanals gegenüber der unter Druck stehenden niedrigviskosen Schmelze zu realisieren. Darüber hinaus handelt es sich auch noch um eine technisch sehr aufwendige und damit teure Lösung, die sich aus vielen präzise zu fertigenden Einzelteilen zusammensetzt und die deshalb auch in der Fertigung sehr teuer ist. Auch ist bei dieser Lösung nicht zu vermeiden, dass mit längeren Betriebszeiten Verschleiß im Lagerbereich auftritt.

Wie bereits erwähnt gibt es beim Extrusionsblasformen neben den beschriebenen Relativverstellmöglichkeiten auch Lösungen, mit denen eine Gesamtverstellung des Austrittsspalts des Fließkanals möglich ist, um eine Wanddickenoptimierung eines schlauchförmigen Vorformlings vornehmen zu können. In EP 0 945 245 A1 wird eine Lösung beschrieben, mit der sowohl die Dornlänge als auch die Länge des Außengehäuses veränderbar ist. In Verbindung mit einem konischen Fließkanalverlauf am Ende des Fließkanals kann man damit eine gleichmäßige Vergrößerung oder Verkleinerung des Fließkanalspalts am Austritt aus der Düse erreichen. Dabei wird entweder eine Hülse auf einem runden Kern oder aber ein Kern in einer runden Hülse verschoben. Damit jedoch die Teile relativ zueinander verschoben werden können, ist es wiederum erforderlich, dass wenigstens ein minimaler Spalt zwischen dem Kern und der Hülse vorhanden sein muss. Somit lässt sich auch bei diesen Lösungen zur Gesamtverstellung der Fließkanalgeometrie ein minimaler Leckstrom, der durch diesen Spalt austritt, nicht vermeiden. Die wichtige Forderung nach einem absolut dichten Kopf ist somit auch bei den bekannten Lösungen für das Extrusionsblasformen nicht erfüllt. Zusätzlich handelt es sich bei den Lösungen zur Gesamtverstellung um aufwendige Konstruktionen mit vielen Einzelkomponenten, die auch wieder mit hoher Präzision hergestellt werden müssen. Somit erfüllen diese nach dem Stand der Technik aufgeführten Konstruktionen auch nicht die Forderung nach einer einfachen und kostengünstigen Lösung.

Darüber hinaus gibt es beim Extrusionsblasformen Lösungen, um die Wanddicke des Schlauchs, der ausgetragen wird, an definierten Stellen über der Länge und über dem Umfang des Vorformlings zu verändern (DE 26 54 001, DE 199 31 870 und EP 1 685 943). Diese Systeme zur dynamischen radialen Wanddickensteuerung erfordern aber spezielle deformierbare Düsen und entsprechende Antriebe zur lokalen Deformation der Düsen sowie eine geeignete zusätzliche Steuerung für die Antriebe. Sie sind somit aus technischer Sicht noch aufwendiger und in der Herstellung noch teurer als die bereits beschriebenen Technologien.

In JP S63 179724 A, US 6 773 249 B1 oder FR 1 500 288 A ist jeweils ein Schlauchkopf mit einer verlagerbaren Düse gezeigt, wobei die Düse ausschließlich längsverschiebbar gelagert ist. In DE 29 41 260 A1 ist ein Schlauchkopf mit einem mittig angeordneten Torpedo beschrieben, der von einem Körper umgeben ist, um einen ringförmigen Fließkanal zu bilden. Der Körper ist im Bereich des Fließraums mindestens in zwei Teile geteilt, welche sich teleskopisch überlappen und zueinander längsverschiebbar ausgebildet sind.

Aufgabe der Erfindung war es deshalb, eine einfachere und kostengünstig zu fertigende und betriebssichere Kopflösung zum Austragen eines Schmelzeschlauchs zu realisieren, mit der sowohl eine Gesamt- als auch gleichzeitig eine Relativverstellung des Fließkanalspalts am Ende des Fließkanals möglich ist, die dabei aber absolut dicht ist, bei der auch keine Totstellen im Fließkanal auftreten und bei der keine Verschleißprobleme während des Betriebs bestehen. Darüber hinaus war es auch Ziel der Erfindung, möglichst noch eine Kopflösung zu realisieren, die beim Extrusionsblasformen auf einfache Weise eine dynamische radiale Wanddickensteuerung ermöglicht, ohne dass dafür metallische Kopfkomponenten aufwendig deformiert werden müssen.

Diese Aufgabe wird durch einen Schlauchkopf mit den kennzeichnenden Merkmalen des Patentanspruchs 1 gelöst. In den Schlauchkopf ist ein trifunktionelles Bauteil integriert, das eine Dichtfunktion, eine Kippfunktion und eine Verschiebefunktion ermöglicht. Das erfindungsgemäße trifunktionelle Bauteil dichtet nicht nur die beiden Kopfteile sicher ab, es ermöglicht auch noch gleichzeitig, dass die Düse relativ zum Kopfgehäuse gekippt (Relativverstellung) und auch noch, dass die Düse relativ zum Kopfgehäuse in axialer Richtung verschoben (Gesamtverstellung) werden kann. Auf diese Weise erhält man mit nur vier einfachen und kostengünstig herzustellenden Kopfteilen, nämlich einem Kopfgehäuse, einem Kern, einer Düse, und dem trifunktionellen Bauteil, die angestrebte verfahrenstechnischen Möglichkeiten des Kopfes, ohne dass im Kopf Spalte vorhanden sind, durch die die Schmelze aus dem Fließkanal entweichen kann und ohne dass im Fließkanal Totstellen auftreten.

Im Detail handelt es sich erfindungsgemäß um einen Schlauchkopf zum Austragen eines Schmelzeschlauchs zur Herstellung von Kapillaren, Schläuchen oder Rohren bestehend aus einem hülsenförmigen Gehäuse, in das die Schmelze eingespeist wird, und das einen fest in das Gehäuse eingespannten Kern allseitig beabstandet umgibt, sowie einer ebenfalls hülsenförmigen Düse, die ebenfalls den Kern allseitig beabstandet umgibt, wobei das Gehäuse und die Düse den Kern so umgeben, dass zwischen dem Gehäuse und dem Kern sowie zwischen der Düse und dem Kern ein Fließkanal vorhanden ist, und dass am Ende des Fließkanals von der Düse und dem Kern ein Austrittsspalt gebildet wird, dadurch gekennzeichnet, dass sich zwischen dem Gehäuse und der Düse ein kostengünstiges, schnell auswechselbares trifunktionelles Bauteil befindet, das den Fließkanal zwischen dem Gehäuse und der Düse sicher abdichtet, und mit dem unter Beibehaltung des Fließwiderstands im Bereich des trifunktionellen Bauteils und unter Beibehaltung eines totstellenfreien Fließkanals der Winkel zwischen dem Gehäuse und der Düse und auch die Kopflänge geändert werden kann, so dass auf diese Weise der Querschnitt des Fließkanalspalts am Ende des Fließkanals geändert werden kann.

Der Austrittsspalt ist der Spalt zwischen der Düse und dem Kern, der am Ende des Fließkanals der Düse vorhanden ist. Ein totstellenfreier Fließkanal ist dadurch charakterisiert, dass im Fließkanal keine abrupten Dimensionsänderungen vorhanden sind. Mit dem erfindungsgemäßen Schlauchkopf wird erstmals durch die Integration eines einzigen einfachen trifunktionellen Bauteils in einen Schlauchkopf sowohl eine Relativverstellung des Fließkanalspalts als auch eine Gesamtverstellung der Querschnittsfläche des Fließkanalspalts möglich, wobei die Düse immer sicher abgedichtet bleibt.

Bei der speziellen Kopflösung bleibt auch bei einer Veränderung der relativen Position zwischen dem trifunktionellen Bauteil und dem Gehäuse der Fließwiderstand des Fließkanals im Bereich des trifunktionellen Bauteils unverändert. Auch die Fließkanalkanten des trifunktionellen Bauteils verbleiben trotz einer Verstellung immer bündig mit dem Gehäuse und der Düse, so dass sich keine Totstellen im Fließkanal bilden. Werden erfindungsgemäße Schlauchköpfe für das Extrusionsblasformen eingesetzt, dann ist es besonders vorteilhaft, wenn die Wand des Fließkanals am Ende des Kerns und am Ende der Düse zumindest aber nur am Ende des Kerns oder aber nur am Ende der Düse nicht, wie bei Köpfen für das Extrusionsblasformen allgemein üblich, konisch sondern in erster Näherung zylindrisch verläuft, und dass entweder die Düse oder aber der Kern oder aber auch die Düse und der Kern im Endbereich des Fließkanals über dem Umfang mindestens eine lokale Profilierung aufweist, die durch eine Veränderung der Kopflänge aus dem Bereich des Fließkanals herausgeschoben werden kann.

Idealerweise sollte der Fließkanal exakt zylindrisch sein, allerdings kann der gewünschte Effekt auch mit einer geringen Konizität im Fließkanal erreicht werden, weshalb im Sinn dieser Erfindung eine Fließkanalwand, die einen Winkel zur Mittelachse des Kopfes von kleiner 10 Grad besitzt als in erster Näherung zylindrisch gilt. Eine lokale Profilierung ist dann aus dem Bereich des Fließkanals herausgeschoben, wenn sich zumindest gegenüber einem Bereich der Profilierung keine zweite Fließkanalwand mehr befindet. Da Schlauchköpfe bei erhöhten Temperaturen betrieben werden, ist es vorteilhaft, wenn das trifunktionelle Bauteil aus einem Metall besteht. Um den Fließkanal immer sicher abzudichten, sollte der Außendurchmesser der Lippe des trifunktionellen Bauteils im nicht montierten Zustand geringfügig größer sein, als der Innendurchmesser des Gehäuses. Zur Montage des trifunktionellen Bauteils wird das Gehäuse aufgeheizt und das trifunktionelle Bauteil abgekühlt, um den Durchmesser des Gehäuses zu vergrößern und den des trifunktionellen Bauteils zu verringern. Nach dem Einschieben des trifunktionellen Bauteils in das Gehäuse baut sich dann beim Angleichen der Temperatur die zum Abdichten erforderliche Dichtkraft zwischen der Lippe des trifunktionellen Bauteils und der Innenwand des Gehäuses auf.

Wenn Schmelzen bei nicht zu hohen Temperaturen aus dem Kopf ausgetragen werden sollen, kann es auch ausreichen, wenn es sich bei dem trifunktionellen Bauteil um ein hoch temperaturbeständiges Elastomerbauteil handelt, das formschlüssig in einer Nut eingespannt ist, die aus dem Gehäuse und der Düse gebildet wird, und deren Querschnittsfläche sich in radialer Richtung nach außen vergrößert, und die auf der dem Fließkanal abgewandten Seite größer ist als die Querschnittsfläche des Elastomerbauteils, wobei sich das Elastomerbauteil auf der dem Fließkanal abgewandten Seite gegen die rückseitige Wand der Nut abstützt.

Unter Verwendung eines Kopfes entsprechend dieser Erfindung lässt sich nun ein Verfahren realisieren, bei dem zum Austragen eines Schmelzeschlauchs und zum Optimieren der Wanddicke des Schmelzeschlauchs mittels Schrauben oder Aktuatoren der Winkel zwischen dem Gehäuse und der Düse und die Kopflänge gemeinsam oder auch nur der Winkel zwischen dem Gehäuse und der Düse beziehungsweise nur die Länge des Kopfes verändert wird, und dass darüber die Querschnittsfläche des Fließkanalspalts am Ende der Düse und folglich auch die Dicke des Schmelzeschlauchs, der aus dem Fließkanalspalt des Schlauchkopfs ausgetragen wird, variiert wird. Erweiterte verfahrenstechnische Möglichkeiten ergeben sich, wenn der Schlauchkopf eine deformierbare Düse besitzt, so dass der Austrittsspalt s am Ende der Düse zusätzlich bei laufendem Verfahren durch eine lokale Verstellung der Düse an bestimmten Stellen über dem Umfang verändert werden kann. Mit einem derartig gestalteten Schlauchkopf können bei der Rohrextrusion sowohl exzentrische Dickenunterschiede im Rohr, als auch nicht symmetrische Dickenänderungen über dem Umfang des Rohres ausgeregelt werden.

Mit einem erfindungsgemäßen Schlauchkopf wird es auch möglich, bei laufendem Prozess die Dickenverteilung des Schlauchs, der ausgetragen wird, kontinuierlich oder zumindest in kurzen Zeitintervallen mindestens an einer Stelle mittels Sensoren zu messen, und die ermittelte Istwanddicke in einem Regler mit der für den jeweiligen Ort vorgegebenen Sollwanddicke zu vergleichen, so dass ein Regler Korrekturwerte ermitteln kann, mit denen die Geometrie des Fließkanalspalts mittels automatisch ansteuerbarer Stellmittel verändert wird, um damit die Differenz zwischen dem erwünschten Soll- und dem gemessenen Istwert der Wanddicke zu verringern.

Die Erfindung wird an Hand der schematischen Zeichnungen im Detail erläutert:
Fig. 1 zeigt eine Ausführungsform des erfindungsgemäßen Schlauchkopfes in einer Schnittdarstellung mit einem metallischen trifunktionellen Bauteil in der linken Kopfhälfte und einem elastischen trifunktionellen Bauteil in der rechten Kopfhälfte, und
Fig. 2 bis 4 zeigen Beispiele erfindungsgemäßer Gestaltungsformen der Dichtungsnut und des trifunktionellen Bauteils.

Im Idealfall besteht der Schlauchkopf lediglich aus vier Einzelteilen, dem hülsenförmigen Gehäuse 1, dem Kern 2, der bei der in Fig. 1 dargestellten Ausführungsform über Stegdornhalter 8 fest im Zentrum des Gehäuses 1 befestigt ist, der hülsenförmigen Düse 3, die mit dem Gehäuse 1 verbunden ist und dem trifunktionellen Bauteil 4.1 bzw. 4.2. Der hülsenförmige Kern 2 besitzt idealerweise aber nicht notwendigerweise eine Bohrung 9, durch die im Bedarfsfall beispielsweise Luft geblasen werden kann. Das trifunktionelle Bauteil 4 befindet sich zwischen dem Gehäuse 1 und der Düse 3 und dichtet den Fließkanal 5 des Schlauchkopfes zwischen dem Gehäuse 1 und der Düse 3 ab. Mehr Einzelteile benötigt der Schlauchkopf nicht. Natürlich können aus unterschiedlichen Gründen noch weitere Teile an den Schlauchkopf angebaut werden, was aber an dem erfindungsgemäßen Grundaufbau des Schlauchkopfes nichts ändert.

Zentraler Bestandteil der Erfindung ist nun das trifunktionelle Bauteil 4. Es übernimmt im Schlauchkopf gleichzeitig drei für die Nutzung des Kopfes wichtige Funktionen. Als erstes dichtet es den Fließkanal 5 sicher ab. Als zweites ermöglicht es gleichzeitig noch, dass die Düse 3 relativ zum Gehäuse 1 gekippt werden kann. Als drittes erlaubt es auch noch, dass die Düse 3 relativ zum Gehäuse 1 und zum Kern 2 verschoben werden kann. Dazu besitzt das Gehäuse 1, wie in Fig. 1 beispielhaft dargestellt, an seinem Ende eine Ausdrehung, in die die Düse 3, die auf der dem Gehäuse 1 zugewandten Seite einen umlaufenden Bund 10 besitzt, hineingeschoben werden kann. Auf der Außenseite des Bundes 10 befindet sich ein Radius R, der ein Kippen der Düse 3 relativ zum Gehäuse 1 erlaubt. Zur genauen Zentrierung der Düse 3 in dem Gehäuse 1 befindet sich zwischen dem Bund 10, der Düse 3 und der Ausdrehung des Gehäuses 1 eine enge Passung.

Idealerweise besteht das trifunktionelle Bauteil 4 aus einem Metall. Es kann universell im gesamten in der Extrusion verwendeten Temperaturbereich eingesetzt werden und ist auch für abrasiv wirkende Schmelzekompounds geeignet. Am günstigsten ist es, wenn das trifunktionelle Bauteil 4.1 aus einem Federstahl besteht. Um ein sicheres Abdichten zu gewährleisten, ist es von Vorteil, wenn der Außendurchmesser Da der Dichtlippe des trifunktionellen Bauteils 4.1 minimal größer ist, als der Innendurchmesser Di des Gehäuses 1, gegenüber dem das trifunktionelle Bauteil 4.1 abdichten muss. Zur Montage des metallischen trifunktionellen Bauteils 4.1 wird das Gehäuse 1 aufgeheizt und das trifunktionelle Bauteil 4.1 gekühlt. Wenn beide Teile sich nach der Montage in ihrer Temperatur angeglichen haben, drückt die Lippe des trifunktionellen Bauteils 4.1 gegen die Innenwand des Gehäuses 1 und dichtet so ab. Im Betrieb wird die Dichtkraft weiter erhöht, da der Schmelzedruck die Lippe zusätzlich nach außen drückt.

Prinzipiell ist es auch denkbar, dass das trifunktionelle Bauteil 4.1 aus einem Metall besteht, das eine größere Wärmedehnung besitzt, als das Gehäuse 1. Dann kann der Außendurchmesser Da der Dichtlippe des metallischen trifunktionellen Bauteils 4.1 gleich groß oder sogar minimal kleiner sein, als der Durchmesser des Gehäuses 1. Die erforderliche Dichtkraft zwischen der Lippe des trifunktionellen Bauteils 4.1 und dem Gehäuse 1 baut sich dann beim Aufheizen des Kopfes auf die Verarbeitungstemperatur der Schmelze auf. Zur weiteren Verbesserung des Verschleißverhaltens kann es vorteilhaft sein, wenn man zusätzlich die Fließkanaloberfläche des trifunktionellen Bauteils 4.1 mit einer speziellen Verschleißschutzschicht und oder die Oberfläche der Dichtlippe des trifunktionellen Bauteils 4.1 mit einer speziellen Gleitschicht versieht. Natürlich ist es auch möglich, das trifunktionelle Bauteil 4.1 um 180 Grad zu drehen, so dass die Dichtlippe dann gegenüber der Düse 3 abdichtet.

Mit einem metallischen trifunktionellen Bauteil 4.1 können durchaus Änderungen der Kopflänge L im Bereich größer 20 mm realisiert werden. Natürlich lässt sich das trifunktionelle Bauteil 4.1 auch direkt am Ende des Gehäuses 1 oder aber an den Anfang der Düse 3 anschweißen. Dann übernimmt das Gehäuse 1 beziehungsweise die Düse 3 auch noch die Funktionen des trifunktionellen Bauteils 4 und der Schlauchkopf besteht dann sogar nur noch aus drei Teilen. Dies hat jedoch den erheblichen Nachteil, dass ein schnelles und vor allem kostengünstiges Wechseln oder Austauschen des trifunktionellen Bauteils 4 nicht mehr möglich ist.

Werden keine großen Anforderungen an die Verschleißfestigkeit des trifunktionellen Bauteils 4 gestellt, liegen die Extrusionstemperaturen nicht zu hoch, und werden keine großen Längenänderungen benötigt, dann kann das trifunktionelle Bauteil 4 auch aus einem elastischen Material bestehen. Um mit einem elastischen trifunktionellen Bauteil 4.2 ein sicheres Abdichten des Fließkanals 5 in der Dichtungsnut, die beim Hineinschieben des Zapfens 10 der Düse 3 in die Ausdrehung des Gehäuses 1 gebildet wird, zu gewährleisten, ist es erst einmal wichtig, dass das elastische trifunktionelle Bauteil 4.2 auf einer bestimmten Länge E mit einem ausreichenden Druck an die Wandungen des Gehäuses 1 und der Düse 3 angedrückt wird. Dabei sollte der Druck größer sein, als der im Fließkanal herrschende Schmelzedruck. Zusätzlich ist es aber unbedingt erforderlich, dass das trifunktionelle Bauteil 4.2 auf seiner Rückseite von dem Gehäuse 1 abgestützt wird und dass damit vermieden wird, dass der Schmelzedruck das trifunktionelle Bauteil 4 radial nach außen schiebt. Idealerweise sollte dabei die abgestützte Länge D größer sein als die Länge B, die die Fließkanaloberfläche bildet und die folglich dem Schmelzedruck ausgesetzt ist. Somit wird erst einmal gewährleistet, dass der Fließkanal in jedem Fall sicher abgedichtet ist.

Das trifunktionelle Bauteil 4.2 sollte aber auch beim Kippen und beim Verschieben der Düse 3 auf keinen Fall in den Fließkanal 5 hineingeschoben werden, da sich damit automatisch im Fließkanal 5 die Kanten des trifunktionellen Bauteils 4.2 von den Kanten des Gehäuses 1 und der Düse 3 abheben würden und es folglich zu Totstellen im Fließkanal 5 kommen würde. Um dies zu vermeiden, besitzt die Dichtungsnut, in der das trifunktionelle Bauteil 4.2 zwischen dem Gehäuse 1 und der Düse 3 eingespannt ist, beispielsweise in dem Bereich, der die Fließkanaloberfläche bildet, die geringste Höhe B. Zusätzlich ist allerdings mindestens noch ein Freiraum 13 in der Dichtungsnut erforderlich, der im Neutralzustand des Schlauchkopfes nicht von dem trifunktionellen Bauteil 4.2 ausgefüllt ist. Wird nun das trifunktionelle Bauteil 4.2 zum Verändern des Winkels W oder aber der Kopflänge L gegenüber dem Neutralzustand weiter gestaucht, dann wird auf Grund der sich radial nach außen erweiternden Dichtungsnut das gestauchte elastische Material nach außen gedrückt, wo es den vorhandenen Freiraum teilweise oder ganz ausfüllt. Der Freiraum 13 ist dabei so dimensioniert, dass trotz des Erreichens des maximal erlaubten Kippwinkels W oder der maximal erlaubten Änderung der Kopflänge L idealerweise noch ein geringer Restfreiraum 13 übrigbleibt. Damit ist sichergestellt, dass das elastische trifunktionelle Bauteil 4.2 sich nicht in den Fließkanal 5 schieben kann.

Unter Kopflänge L sei in dieser Anmeldung die Länge des Kopfes beginnend auf der Seite des Gehäuses 1, wo die Schmelze eingespeist wird, und endend am Ende der Düse 3, wo die Schmelze den Schlauchkopf verlässt, verstanden. Die in dem in Fig. 1 dargestellten Ausführungsbeispiel gezeigte Form des trifunktionellen Bauteils 4.2 ist nur eine von vielen möglichen erfindungsgemäßen Formen. In Fig. 2 bis 4 sind beispielhaft weitere mögliche Gestaltungsmöglichkeiten für die Nut gezeigt. Wichtig ist dabei jeweils, dass durch die geometrische Gestaltung der Dichtungsnut und die des trifunktionellen Bauteils 4.2 vermieden wird, dass das trifunktionelle Bauteil 4.2 sich in den Fließkanal schieben kann und dass ausreichend Freiraum 13 vorhanden ist, in den sich das beim Kippen oder beim Verschieben verdrängte elastische Material ansammeln kann. Dabei kann es auch von Vorteil sein, wenn die Oberflächen der Nutwände des Gehäuses 1 und der Düse 3 eine bestimmte Rauheit besitzen, die ein Abgleiten des trifunktionellen Bauteils 4.2 an den Nutwänden behindert.

Mit dem sehr einfachen erfindungsgemäßen Schlauchkopf können Verfahren ausgeführt werden, für die bisher sehr komplizierte Kopfkonstruktionen verwendet werden mussten, bei denen jeweils für das Verändern des Winkels W bzw. der Länge L separate Funktionseinheiten in den Köpfen erforderlich waren. So kann man beispielsweise einen Schmelzeschlauch 7 aus einem erfindungsgemäßen Schlauchkopf austragen und zum Optimieren der Wanddicke des Schmelzeschlauchs 7, den Winkel W zwischen dem Gehäuse 1 und der Düse 3 und die Kopflänge L gemeinsam oder auch nur den Winkel W beziehungsweise nur die Länge L verändern. Dabei können Schrauben oder auch Aktuatoren 11 verwendet werden, um die Querschnittsfläche des Fließkanalsspalts s am Ende der Düse 3 und folglich auch die Dicke d des Schmelzeschlauchs, der aus dem Fließkanalspalt s des Schlauchkopfs ausgetragen wird, zu verändern.

Im Bereich der Schlauch- bzw. Rohrextrusion kann damit bei laufendem Prozess die Dickenverteilung des Schmelzeschlauchs 7, der aus dem Schlauchkopf ausgetragen wird, kontinuierlich oder zumindest in kurzen Zeitintervallen mindestens an einer Stelle mittels Sensoren gemessen werden, um die ermittelte Istwanddicke in einem Regler mit der für den jeweiligen Ort vorgegebenen Sollwanddicke vergleichen zu können, und um über einen Regler Korrekturwerte zu ermitteln, mit denen die Geometrie des Fließkanalspalts s mittels automatisch ansteuerbarer Stellmittel verändert wird, um damit die Differenz zwischen dem erwünschten Soll- und dem gemessenen Istwert der Wanddicke zu verringern. Auf diese Weise kann die Wanddickentoleranz gegenüber den zur Zeit erreichbaren Toleranzen weiter verringert werden, wobei exzentrische Dickenunterschiede und unsymmetrische Dickenunterschiede mittels eigener getrennter oder auch miteinander verknüpfter Regelkreise ausgeregelt werden können.

Beim Extrusionsblasformen ergeben sich mit dem erfindungsgemäßen Schlauchkopf ebenfalls erweiterte mit dem bisherigen Stand der Technik nicht realisierbare verfahrenstechnische Möglichkeiten, die Dickenverteilung im Vorformling entsprechend den Notwendigkeiten, die durch das herzustellende Teil vorgegeben werden, anzupassen. Ein Maximum an Einstellmöglichkeiten wird dabei erreicht, wenn beim Schlauchkopf als Düse 3 eine deformierbare Düse 3 verwendet wird, und wenn damit der Austrittsspalt s am Ende der Düse 3 zusätzlich bei laufendem Verfahren durch eine lokale Verstellung der Düse 3 an bestimmten Stellen über dem Umfang verändert wird.

## Patentansprüche

1. Schlauchkopf zum Austragen eines Schmelzeschlauchs (7) zur Herstellung von Kapillaren, Schläuchen oder Rohren, bestehend aus einem hülsenförmigen Gehäuse (1), in das die Schmelze eingespeist wird, und das einen fest in das Gehäuse (1) eingespannten Kern (2) allseitig beabstandet umgibt, sowie einer ebenfalls hülsenförmigen Düse (3), die ebenfalls den Kern (2) allseitig beabstandet umgibt, wobei das Gehäuse (1) und die Düse (3) den Kern (2) so umgeben, dass zwischen dem Gehäuse (1) und dem Kern (2) sowie zwischen der Düse (3) und dem Kern (2) ein geschlossener Fließkanal (5) vorhanden ist, wobei mittels Schrauben oder Aktuatoren (11) die Düse (3) relativ zu dem Gehäuse (1) in axialer Richtung verschiebbar und eine Kopflänge (L) dadurch veränderbar ist, wobei sich zwischen dem Gehäuse (1) und der Düse (3) ein schnell auswechselbares, trifunktionelles Bauteil (4) befindet, das den Fließkanal (5) zwischen dem Gehäuse (1) und der Düse (3) sicher abdichtet, und wobei am Ende des Fließkanals (5) von der Düse (4) und dem Kern (2) ein umlaufender geschlossener Austrittsspalt (s) mit einer Querschnittfläche gebildet wird, **dadurch gekennzeichnet, dass** mittels Schrauben oder Aktuatoren (11) ein Winkel (W) zwischen dem Gehäuse (1) und der Düse (3) und die Kopflänge (L) gemeinsam veränderbar sind oder nur der Winkel (W) zwischen dem Gehäuse (1) und der Düse (3) veränderbar ist, und dass unter Beibehaltung des Fließwiderstands im Bereich des trifunktionellen Bauteils (4) und unter Beibehaltung eines totstellenfreien Fließkanals der Winkel (W) zwischen dem Gehäuse (1) und der Düse (3) und die Kopflänge (L) veränderbar sind, so dass auf diese Weise die Querschnittfläche des Fließkanalspalts (s) am Ende des Fließkanals (5) veränderbar ist.

2. Schlauchkopf nach Anspruch 1 **dadurch gekennzeichnet, dass** bei einer Veränderung der relativen Position zwischen dem trifunktionellen Bauteil (4) und dem Gehäuse (1) der Fließwiderstand des Fließkanals (5) im Bereich des trifunktionellen Bauteils (4) unverändert bleibt, und dass Fließkanalkanten des trifunktionellen Bauteils (4) immer bündig mit dem Gehäuse (1) und der Düse (3) verbleiben.

3. Schlauchkopf nach einem der vorgenannten Ansprüche **dadurch gekennzeichnet, dass** eine Wand des Fließkanals am Ende des Kerns (2) und am Ende der Düse (3), wenigstens aber nur am Ende des Kerns (2) oder aber nur am Ende der Düse (3) in erster Näherung zylindrisch verläuft, und dass entweder die Düse (3) oder aber der Kern (2) oder aber auch die Düse (3) und der Kern (2) in einem Endbereich des Fließkanals (5) über dem Umfang mindestens eine lokale Profilierung (12) aufweisen, die durch eine Veränderung der Kopflänge (L) aus dem Bereich des Fließkanals (5) herausschiebbar ist.

4. Schlauchkopf nach einem der vorgenannten Ansprüche **dadurch gekennzeichnet, dass** das trifunktionelle Bauteil (4) aus einem Metall besteht und dass ein Außendurchmesser Da der Lippe des trifunktionellen Bauteils (4.1) im nicht montierten Zustand größer ist als ein Innendurchmesser Di des Gehäuses (1).

5. Schlauchkopf nach einem der vorgenannten Ansprüche 1 bis 3, **dadurch gekennzeichnet, dass** es sich bei dem trifunktionellen Bauteil (4) um ein hoch temperaturbeständiges Elastomerbauteil (4.2) handelt, das formschlüssig in einer Nut eingespannt ist, die aus dem Gehäuse (1) und der Düse (3) gebildet wird, deren Querschnittsfläche sich in radialer Richtung nach außen vergrößert und die auf der dem Fließkanal (5) abgewandten Seite größer ist als eine Querschnittsfläche des Elastomerbauteils (4.2), wobei sich das Elastomerbauteil (4.2) auf der dem Fließkanal abgewandten Seite gegen die rückseitige Wand der Nut abstützt.

6. Verfahren zum Optimieren einer Wanddicke (d) eines Schmelzeschlauchs (7) und zum Austragen des Schmelzeschlauchs (7) aus einem Schlauchkopf gemäß einem der vorgenannten Ansprüche 1 bis 5, **dadurch gekennzeichnet, dass** mittels Schrauben oder Aktuatoren (11) der Winkel (W) zwischen dem Gehäuse (1) und der Düse (3) und die Kopflänge (L) gemeinsam verändert werden oder auch nur der Winkel (W) verändert wird, und dass darüber die Querschnittsfläche des Fließkanalspalts (s) am Ende der Düse (3) und folglich auch die Dicke (d) des Schmelzeschlauchs (7), der aus dem Fließkanalspalt (s) des Schlauchkopfs ausgetragen wird, verändert wird.

7. Verfahren nach Anspruch 6, **dadurch gekennzeichnet, dass** während einer Durchführung des Verfahrens die Dickenverteilung des Schlauchs (7), der aus dem Schlauchkopf ausgetragen wird, kontinuierlich oder zumindest in kurzen Zeitintervallen mindestens an einer Stelle mittels Sensoren gemessen wird, und dass eine ermittelte Istwanddicke in einem Regler mit der für den jeweiligen Ort vorgegebenen Sollwanddicke verglichen wird, und dass der Regler Korrekturwerte ermittelt, mit denen der Fließkanalspalt (s) mittels automatisch ansteuerbarer Stellmittel verändert wird, um damit die Differenz zwischen dem erwünschten Soll- und dem gemessenen Istwert der Wanddicke zu verringern.

8. Verfahren nach Anspruch 7, **dadurch gekennzeichnet, dass** exzentrische Dickenunterschiede und unsymmetrische Dickenunterschiede mittels eigener getrennter oder auch miteinander verknüpfter Regelkreise ausgeregelt werden.

9. Verfahren nach einem der Ansprüche 6 bis 8, **dadurch gekennzeichnet dass** der Schlauchkopf eine deformierbare Düse (3) besitzt, und dass der Austrittsspalt (s) am Ende der Düse (3) zusätzlich bei laufendem Verfahren durch eine lokale Verstellung der Düse (3) an bestimmten Stellen über dem Umfang verändert wird.

## Claims

1. Parison head for discharging a molten tube (7) for the manufacture of capillaries, tubes or pipes, consisting of a sleeve-shaped housing (1), into which the melt is fed and which encloses a core (2) fixedly clamped into the housing (1) on all sides at a distance, and of a likewise sleeve-shaped nozzle (3), which likewise encloses the core (2) on all sides at a distance, wherein the housing (1) and the nozzle (3) enclose the core (2) such that a closed flow channel (5) is present between the housing (1) and the core (2) and between the nozzle (3) and the core (2), wherein the nozzle (3) is displaceable by means of screws or actuators (11) relative to the housing (1) in an axial direction and a parison length (L) is variable thereby, wherein between the housing (1) and the nozzle (3) there is located a rapidly interchangeable, trifunctional component (4), which securely seals the flow channel (5) between the housing (1) and the nozzle (3), and wherein at the end of the flow channel (5) a circumferential closed exit gap (s) with a cross-sectional area is formed by the nozzle (4) and the core (2), **characterised in that** an angle (W) between the housing (1) and the nozzle (3) and the parison length (L) are jointly variable by means of screws or actuators (11) or only the angle (W) between the housing (1) and the nozzle (3) is variable, and that, retaining the flow resistance in the region of the trifunctional component (4) and retaining a flow channel devoid of dead zones, the angle (W) between the housing (1) and the nozzle (3) and the parison length (L) are variable, so that the cross-sectional area of the flow channel gap (s) at the end of the flow channel (5) is variable in this way.

2. Parison head according to claim 1, **characterised in that**, in the event of a variation in the relative position between the trifunctional component (4) and the housing (1), the flow resistance of the flow channel (5) remains unchanged in the region of the trifunctional component (4), and that flow channel edges of the trifunctional component (4) always remain flush with the housing (1) and the nozzle (3).

3. Parison head according to one of the previous claims, **characterised in that** a wall of the flow channel at the end of the core (2) and at the end of the nozzle (3), but at least only at the end of the core (2) or only at the end of the nozzle (3) runs in a first approximation cylindrically, and that either the nozzle (3) or the core (2) or also the nozzle (3) and the core (2) in an end region of the flow channel (5) have over the circumference at least a local profiling (12) that can be pushed out of the region of the flow channel (5) by a variation of the parison length (L).

4. Parison head according to any one of the previous claims, **characterised in that** the trifunctional component (4) consists of a metal and that an external diameter Da of the lip of the trifunctional component (4.1) in the unassembled state is greater than an internal diameter Di of the housing (1).

5. Parison head according to any one of the previous claims 1 to 3, **characterised in that** the trifunctional component (4) is a highly temperature-resistant elastomer component (4.2), which is clamped positively in a groove, which is formed from the housing (1) and the nozzle (3) and the cross-sectional area of which increases in a radial direction outwards and which is greater on the side facing away from the flow channel (5) than a cross-sectional area of the elastomer component (4.2), wherein the elastomer component (4.2) is supported on the side facing away from the flow channel against the rear wall of the groove.

6. Method for optimising a wall thickness (d) of a molten tube (7) and for discharging the molten tube (7) from a parison head according to any of the previous claims 1 to 5, **characterised in that** the angle (W) between the housing (1) and the nozzle (3) and the parison length (L) are varied jointly by means of screws or actuators (11) or only the angle (W) is varied, and that furthermore the cross-sectional area of the flow channel gap (s) at the end of the nozzle (3) and consequently also the thickness (d) of the molten tube (7), which is discharged from the flow channel gap (s) of the parison head, is varied.

7. Method according to claim 6, **characterised in that** during execution of the method, the thickness distribution of the tube (7) that is discharged from the parison head is measured continuously or at least at short time intervals at least at one point by means of sensors, and that a determined actual wall thickness is compared in a control unit with the target wall thickness specified for the respective location, and that the control unit determines correction values by which the flow channel gap (s) is varied by means of automatically activatable adjusting means in order to reduce thereby the difference between the desired target and the measured actual value of the wall thickness.

8. Method according to claim 7, **characterised in that** eccentric thickness differences and asymmetrical thickness differences are adjusted by means of particular separate control loops or also control loops linked to one another.

9. Method according to any one of claims 6 to 8, **characterised in that** the parison head has a deformable nozzle (3) and that the exit gap (s) at the end of the nozzle (3) is additionally varied while the method is in operation by a local adjustment of the nozzle (3) at certain points across the circumference.

## Revendications

1. Tête de tuyau destinée à décharger un tuyau de masse fondue (7) pour la fabrication de tubes capillaires, tuyaux ou tubes, constituée d'un boîtier (1) en forme de fourreau, dans lequel la masse fondue est alimentée et qui entoure à distance et de tous les côtés un noyau (2) encastré fixement dans le boîtier (1), ainsi que d'une filière (3) également en forme de fourreau, qui entoure également à distance et de tous les côtés le noyau (2), le boîtier (1) et la filière (3) entourant le noyau (2) de telle manière qu'entre le boîtier (1) et le noyau (2) ainsi qu'entre la filière (3) et le noyau (2) se trouve un conduit d'écoulement (5) fermé, la filière (3) étant déplaçable dans la direction axiale par rapport au boîtier (1) au moyen de vis ou d'actionneurs (11) et une longueur de tête (L) étant ainsi modifiable, un composant trifonctionnel (4) échangeable rapidement se trouvant entre le boîtier (1) et la filière (3), lequel rend étanche le conduit d'écoulement (5) entre le boîtier (1) et la filière (3) de manière sûre, et un entrefer de sortie (s) périphérique fermé doté d'une surface de coupe transversale étant formé par la filière (4) et le noyau (2) à l'extrémité du conduit d'écoulement (5), **caractérisée en ce que**, au moyen de vis ou d'actionneurs (11), un angle (W) entre le boîtier (1) et la filière (3) et la longueur de tête (L) peuvent être modifiés ensemble ou uniquement l'angle (W) entre le boîtier (1) et la filière (3) peut être modifié, et **en ce que**, en conservant la résistance à l'écoulement dans la zone du composant trifonctionnel (4) et en conservant un conduit d'écoulement dépourvu de points morts, l'angle (W) entre le boîtier (1) et la filière (3) et la longueur de tête (L) peuvent être modifiés, de sorte que, de cette manière, la surface de coupe transversale de l'entrefer de conduit d'écoulement (s) peut être modifiée à l'extrémité du conduit d'écoulement (5).

2. Tête de tuyau selon la revendication 1, **caractérisée en ce que**, lors de la modification de la position relative entre le composant trifonctionnel (4) et le boîtier (1), la résistance à l'écoulement du conduit d'écoulement (5) demeure inchangée dans la zone du composant trifonctionnel (4), et **en ce que** des bords de conduit d'écoulement du composant trifonctionnel (4) demeurent toujours à fleur du boîtier (1) et de la filière (3).

3. Tête de tuyau selon l'une des revendications précédentes, **caractérisé en ce qu'**une paroi du conduit d'écoulement s'étend en première approximation de manière cylindrique à l'extrémité du noyau (2) et à l'extrémité de la filière (3), au moins toutefois uniquement à l'extrémité du noyau (2) ou bien uniquement à l'extrémité de la filière (3), et **en ce que** soit la filière (3) soit le noyau (2) ou bien la filière (3) et le noyau (2) comportent, dans une zone d'extrémité du conduit d'écoulement (5), au moins un profilage (12) local sur la périphérie, ledit profilage local pouvant être poussé hors de la zone du conduit d'écoulement (5) par une modification de la longueur de tête (L).

4. Tête de tuyau selon l'une des revendications précédentes, **caractérisée en ce que** le composant trifonctionnel (4) est constitué d'un métal et **en ce qu'**un diamètre extérieur Da de la lèvre du composant trifonctionnel (4.1) est supérieur à un diamètre intérieur Di du boîtier (1) à l'état non monté.

5. Tête de tuyau selon l'une des revendications précédentes 1 à 3, **caractérisé en ce que** le composant trifonctionnel (4) est un composant en élastomère (4.2) à haute résistance aux variations de température, qui est encastré par complémentarité de forme dans une rainure, qui est formée par le boîtier (1) et la filière (3), dont la surface de coupe transversale augmente dans la direction radiale vers l'extérieur et qui est plus grande sur le côté orienté dans la direction opposée au conduit d'écoulement (5) qu'une surface de coupe transversale du composant en élastomère (4.2), le composant en élastomère (4.2) s'appuyant, sur le côté orienté dans la direction opposée au conduit d'écoulement, contre la paroi arrière de la rainure.

6. Procédé pour optimiser une épaisseur de paroi (d) d'un tuyau de masse fondue (7) et pour décharger le tuyau de masse fondue (7) par une tête de tuyau selon l'une des revendications précédentes 1 à 5, **caractérisé en ce que**, au moyen de vis ou d'actionneurs (11), l'angle (W) entre le boîtier (1) et la filière (3) et la longueur de tête (L) sont modifiés ensemble ou uniquement l'angle (W) est modifié, et **en ce que** par ce biais la surface de coupe transversale de l'entrefer de conduit d'écoulement (s) à l'extrémité de la filière (3) et par conséquent également l'épaisseur (d) du tuyau de masse fondue (7), qui est décharge par l'entrefer de conduit d'écoulement (s) de la tête de tuyau, est modifiée.

7. Procédé selon la revendication 6, **caractérisé en ce que**, pendant une exécution du procédé, la répartition de l'épaisseur du tuyau (7), qui est déchargé par la tête de tuyau, est mesurée en continu ou au moins à des intervalles de temps courts au moins en un point au moyen de capteurs, et **en ce qu'**une épaisseur de paroi réelle déterminée est comparée dans un régulateur avec l'épaisseur de paroi théorique prédéfinie pour l'emplacement respectif, et **en ce que** le régulateur détermine des valeurs de correction, avec lesquelles l'entrefer de conduit d'écoulement (s) est modifié à l'aide de moyens de réglage à commande automatique, pour diminuer ainsi la différence entre la valeur théorique souhaitée et la valeur réelle mesurée de l'épaisseur de paroi.

8. Procédé selon la revendication 7, **caractérisé en ce que** des différences d'épaisseur excentriques et des différences d'épaisseur asymétriques sont régulées au moyen de boucles d'asservissement propres séparées ou bien reliées entre elles.

9. Procédé selon l'une des revendications 6 à 8, **caractérisé en ce que** la tête de tuyau possède une filière (3) déformable, et **en ce que** l'entrefer de sortie (s) à l'extrémité de la filière (3) est modifié en plus lorsque le procédé est en cours par un réglage local de la filière (3) en des points précis sur la périphérie.
